# EUROPEAN PATENT APPLICATION

(11) **EP 4 851 562 A1**
(43) Date of publication of application: **09.12.2026**
(21) Application number: 25794882.8
(22) Date of filing: 14.03.2025
(51) Int. Cl.: F25B 25/00, F25B 49/00, F25B 47/00, F28D 20/00, F24D 3/18, F24D 17/02, H04Q 9/00

(54) **HEAT PUMP SYSTEM AND CONTROL METHOD THEREOF**

(30) Priority: 24.04.2024 KR 20240055031; 05.07.2024 KR 20240089200
(71) Applicant: Samsung Electronics Co., Ltd., Suwon-si, Gyeonggi-do 16677 (KR)
(72) Inventor: LEE, Naeseong, Suwon-si Gyeonggi-do 16677 (KR); KIM, Taeil, Suwon-si Gyeonggi-do 16677 (KR); LEE, Minwoo, Suwon-si Gyeonggi-do 16677 (KR); CHANG, Min, Suwon-si Gyeonggi-do 16677 (KR); HAN, Sangyoon, Suwon-si Gyeonggi-do 16677 (KR); LEE, Changyong, Suwon-si Gyeonggi-do 16677 (KR)
(74) Representative: Walaski, Jan Filip
(86) International application number: PCT/KR2025/003270
(87) International publication number: WO 2025/225882

(57) **Abstract**

A heat pump system may include: a compressor configured to compress a refrigerant; a first heat exchanger configured to perform heat exchange between the refrigerant and outdoor air; a second heat exchanger configured to perform heat exchange between water and the refrigerant discharged from the compressor or the first heat exchanger; an inlet temperature sensor configured to detect an inlet temperature of water flowing into the second heat exchanger; a three-way valve configured to switch a flow path of water discharged from the second heat exchanger; a heat storage device configured to heat water discharged from the second heat exchanger; and a controller configured to: identify an operation mode of the heat pump system performed before entering a defrosting operation of the first heat exchanger, and during the defrosting operation of the first heat exchanger, control the three-way valve to allow water discharged from the second heat exchanger to be supplied to an indoor heating device or the heat storage device, based on the operation mode and the inlet temperature of water flowing into the second heat exchanger detected by the inlet temperature sensor.

## Description

### Technical Field

The disclosure relates to a heat pump system and a method for controlling the same, and more specifically, to a heat pump system capable of supplying hot water through heat exchange and a method for controlling the same.

### Background Art

In general, a heat pump is a device that moves heat from a low-temperature side to a high-temperature side for cooling and heating (Air to Air) and water supply (Air to Water) by using heat produced and recovered during a cycle of compression, condensation, and evaporation of a refrigerant. A heat pump is mainly used for various temperature-related operations such as heating, cooling, refrigeration, and hot water production.

A hot water supply device using a heat pump (hereinafter referred to as a 'heat pump system') is mainly used when hot water is required in a residential building or a commercial facility. A heat pump system is widely used because a heat pump system is more energy-efficient and more environmentally friendly than a method of heating water by using a traditional hot water supply system such as an electric boiler or a gas boiler.

In general, a heat pump system may include a refrigerant cycle including a compressor, an expansion device, a first heat exchanger, and a refrigerant pipe, and a water-based cycle including a terminal such as a radiator, a buffer tank, an auxiliary heat source, and a water pipe.

The refrigerant cycle that absorbs heat from outdoor air may transfer heat to the water-based cycle. In the refrigerant cycle, a first heat exchanger through which heat exchange with outdoor air is performed may be disposed. Between the refrigerant cycle and the water-based cycle, a second heat exchanger through which heat exchange is performed may be disposed.

When heating water is supplied, the first heat exchanger operates as an evaporator, and the refrigerant absorbs heat from outdoor air. In this instance, frost formation, which is a phenomenon in which water vapor in air is condensed and attached to a surface of the refrigerant pipe, may occur, and to prevent such frost formation, the heat pump system requires a defrosting operation of the first heat exchanger.

During the defrosting operation of the first heat exchanger in the heat pump system, the first heat exchanger operates as a condenser, and the refrigerant discharges heat to outdoor air to remove frosted ice. This heat is absorbed from water, which is a secondary heat source, in the second heat exchanger in an outdoor unit, and as a result, the water in the second heat exchanger may be frozen by the low-temperature refrigerant that has discharged the heat. The frozen water increases in volume due to a phase change, which causes the second heat exchanger to freeze and burst. In existing technologies, in order to prevent refrigerant leakage between plates and mixing of the refrigerant and water caused by the freeze-and-burst of the second heat exchanger, antifreeze is used instead of water, or an auxiliary heat source is installed.

### Disclosure

### Technical Problem

An aspect of the disclosure provides a heat pump system and a method for controlling the same that may, during a defrosting operation of a first heat exchanger, measure a temperature of water flowing into a second heat exchanger in an outdoor unit based on an operation mode of the heat pump system before the defrosting operation, and may control a three-way valve in an indoor unit, thereby increasing efficiency of a heating operation in winter and convenience of a user.

As a temperature of water flowing into an outdoor unit decreases during the defrosting operation of the first heat exchanger, when a freeze-and-burst of the second heat exchanger occurs, water may penetrate into the refrigerant cycle, and a fatal defect may occur in a heat pump system. In existing technologies, to prevent such a defect, an auxiliary heat source such as an electric heater is installed to maintain a water temperature, or an operation of a heat pump system is stopped to protect the second heat exchanger. As a result, efficiency of use of the heat pump system decreases, and a user is supplied with relatively cold water rather than hot water according to the defrosting operation of the first heat exchanger, which leads to decreased satisfaction of the user with the heat pump system. To prevent the above and the freeze-and-burst of the second heat exchanger, a temperature of water may be maintained high even during the defrosting operation of the first heat exchanger by using a heat storage device such as a hot water heat source, thereby increasing efficiency of a heat pump system and satisfaction of a user.

Technical aspects that can be achieved by the disclosure are not limited to the above-mentioned aspects, and other technical aspects not mentioned will be clearly understood by one of ordinary skill in the technical art to which the disclosure belongs from the following description.

### Technical Solution

According to an aspect of the disclosure, a heat pump system may include: a compressor configured to compress a refrigerant; a first heat exchanger configured to perform heat exchange between the refrigerant and outdoor air; a second heat exchanger configured to perform heat exchange between water and the refrigerant discharged from the compressor or the first heat exchanger; an inlet temperature sensor configured to detect an inlet temperature of water flowing into the second heat exchanger; a three-way valve configured to switch a flow path of water discharged from the second heat exchanger; a heat storage device configured to heat water discharged from the second heat exchanger; and a controller configured to: identify an operation mode of the heat pump system performed before entering a defrosting operation of the first heat exchanger, and during the defrosting operation of the first heat exchanger, control the three-way valve to allow water discharged from the second heat exchanger to be supplied to an indoor heating device or the heat storage device, based on the operation mode and the inlet temperature of water flowing into the second heat exchanger detected by the inlet temperature sensor.

According to an aspect of the disclosure, in a method for controlling a heat pump system including a first heat exchanger, a second heat exchanger, a heat storage device, and a three-way valve configured to switch a flow path of water discharged from the second heat exchanger, the method may include: identifying an operation mode of the heat pump system performed before entering a defrosting operation of the first heat exchanger; and controlling, during the defrosting operation of the first heat exchanger, the three-way valve to allow water discharged from the second heat exchanger to be supplied to an indoor heating device or the heat storage device based on the operation mode and an inlet temperature of water flowing into the second heat exchanger detected by an inlet temperature sensor.

### Advantageous Effects

According to an aspect of the disclosure, a temperature of water may be maintained high during a defrosting operation of a first heat exchanger without an auxiliary heat source, and thus a continuous operation may be performed without stopping an operation of a heat pump system to prevent a freeze-and-burst of the heat pump system. Accordingly, an operation rate and efficiency of a heating operation may be increased. Also, cold water does not flow into an indoor heating device even during the defrosting operation of the first heat exchanger, thereby increasing satisfaction and convenience of a user.

### Description of Drawings

FIG. 1 illustrates a configuration of a heat pump system according to an embodiment.
FIG. 2 illustrates a flow of water in a second heat exchanger in an outdoor unit during a defrosting operation of a first heat exchanger according to an embodiment.
FIG. 3 illustrates a flow of water when an operation mode of a heat pump system before a defrosting operation of a first heat exchanger is a first operation mode according to an embodiment.
FIG. 4 illustrates a flow of water when an operation mode of a heat pump system before a defrosting operation of a first heat exchanger is a second operation mode according to an embodiment.
FIG. 5 is a control block diagram in a defrosting mode of a first heat exchanger in a heat pump system according to an embodiment.
FIG. 6 is a flowchart illustrating a method for controlling a heat pump system during a defrosting operation of a first heat exchanger in the heat pump system according to an embodiment.
FIG. 7 is a flowchart illustrating a method for controlling a heat pump system that controls a flow of water according to an inlet temperature of water flowing into a second heat exchanger during a defrosting operation, when an operation mode of the heat pump system before the defrosting operation of a first heat exchanger is a first operation mode according to an embodiment.
FIG. 8 is a flowchart illustrating a method for controlling a heat pump system for determining a flow of water during a defrosting operation, when an operation mode of the heat pump system before the defrosting operation of a first heat exchanger is a second operation mode according to an embodiment.

### Modes of the Invention

Various embodiments of the disclosure and terms used herein are not intended to limit the technical features described in the disclosure to specific embodiments, and should be understood to include various modifications, equivalents, or substitutions of the corresponding embodiments.

In describing of the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

For example, "at least one of A, B, or C" may indicate A, B, C, a combination of A and B, a combination of A and C, a combination of B and C, or a combination of A, B, and C.

Terms such as "1st", "2nd", "primary", or "secondary" may be used simply to distinguish an element from other elements, without limiting the element in other aspects (e.g., importance or order).

When an element (e.g., a first element) is referred to as being "(functionally or communicatively) coupled" or "connected" to another element (e.g., a second element), the first element may be connected to the second element, directly (e.g., wired), wirelessly, or through a third element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

As used herein, the term "and/or" includes any and all combinations of one or more of the associated listed items.

Hereinafter, a heat pump system according to various embodiments of the disclosure will be described in detail with reference to the accompanying drawings, but the disclosure is not limited thereto.

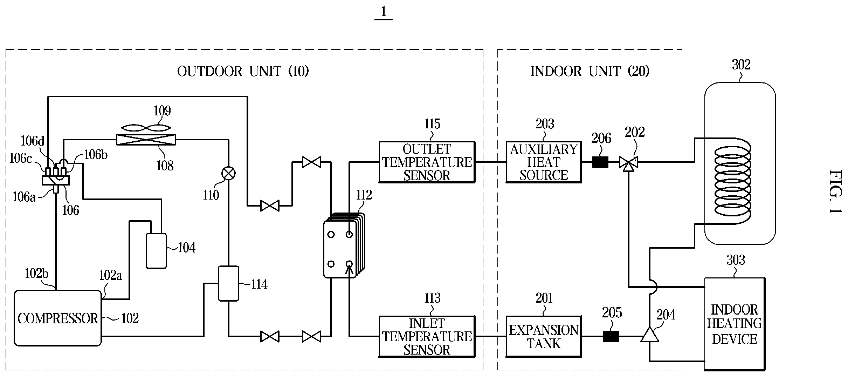

FIG. 1 illustrates a configuration of a heat pump system according to an embodiment. A heat pump system 1 may include an outdoor unit 10, an indoor unit 20, a heat storage device 302, and an indoor heating device 303.

The outdoor unit 10 in the heat pump system 1 may include a compressor 102, a second heat exchanger (refrigerant-water) 112, an expansion valve 110, a first heat exchanger (refrigerant-outdoor air) 108, a flow path switching valve 106, and an accumulator 104.

The compressor 102 may compress a low-temperature and low-pressure refrigerant drawn in through an inlet side 102a to form a high-temperature and high-pressure refrigerant, and then discharge the high-temperature and high-pressure refrigerant through an outlet side 102b. The compressor 102 may be configured as an inverter compressor whose compression capacity varies depending on an input frequency, or may be configured as a combination of a plurality of constant-speed compressors with a constant compression capacity. The inlet side 102a of the compressor 102 is connected to the accumulator 104, and the outlet side 102b of the compressor 102 is connected to the flow path switching valve 106. The flow path switching valve 106 is also connected to the accumulator 104.

The accumulator 104 may be installed between the inlet side 102a of the compressor 102 and the flow path switching valve 106. In response to an inflow of a condensed liquid refrigerant through the flow path switching valve 106, the accumulator 104 may temporarily store a mixture of oil and refrigerant, and separate the non-vaporized liquid refrigerant to prevent the liquid refrigerant from being drawn into the compressor 102, thereby preventing damage to the compressor 102. The gas refrigerant separated by the accumulator 104 is drawn into the inlet side 102a of the compressor 102.

The flow path switching valve 106 may be configured as a four-way valve, and switch a flow of the refrigerant discharged from the compressor 102 according to an operation mode (cooling or heating), thereby forming a refrigerant flow path required for a corresponding operation mode. The flow path switching valve 106 may include a first port 106a connected to the outlet side 102b of the compressor 102, a second port 106b connected to the first heat exchanger 108, a third port 106c connected to the second heat exchanger 112, and a fourth port 106d connected to the accumulator 104, which is the inlet side 102a of the compressor 102.

The first heat exchanger 108 operates as a condenser in a cooling mode, and operates as an evaporator in a heating mode. A first expansion valve 110 is connected to one side of the first heat exchanger 108. An outdoor fan 109 to increase heat exchange efficiency between the refrigerant and outdoor air may be installed in the first heat exchanger 108.

The expansion valve 110 may be configured as an electronic expansion valve, expand the refrigerant, control a flow rate of the refrigerant, and block a flow of the refrigerant when required. The expansion valve 110 may be replaced with an expansion device having a different structure that performs such a function.

The refrigerant compressed in the compressor 102 may be delivered to the second heat exchanger (refrigerant-water) 112. Water from the indoor unit may be delivered to the second heat exchanger 112. Inside the second heat exchanger 112, a plurality of heat exchange plates through which the refrigerant passes and a plurality of heat exchange plates through which water passes are installed alternately, and through heat exchange between the heat exchange plates through which the refrigerant passes and the heat exchange plates through which water passes, cold water/hot water may be produced. The second heat exchanger may be a plate-type or shell-and-tube-type heat exchanger. The cold water/hot water produced in the second heat exchanger 112 is provided to a water supply tank, a fan coil unit, a floor cooling/heating device, or the like, and is used for cold water/hot water supply and cooling/heating.

The indoor unit 20 in the heat pump system 1 may include an auxiliary heat source 203 that increases a temperature of water to prevent a freeze-and-burst of the second heat exchanger during a defrosting operation of the first heat exchanger, a three-way valve 202 capable of changing a flow path of water, a flow path switching device 204, an expansion tank 201, an expansion tank front-end temperature sensor 205, and an auxiliary heat source rear-end temperature sensor 206.

The heat storage device 302 in the heat pump system 1 may be a water tank in which a large amount of water is stored, a water tank heating device, or a hot water supply tank. The heat storage device 302 may include a flow path through which water circulating through the heat pump system 1 flows. The heat storage device 302 may function as an auxiliary heat source during the defrosting operation of the first heat exchanger 108, thereby preventing the second heat exchanger 112 in the outdoor unit 10 from freezing and bursting due to low-temperature water.

The indoor heating device 303 may refer to an indoor room, an ondol, a boiler pipe, and a radiator.

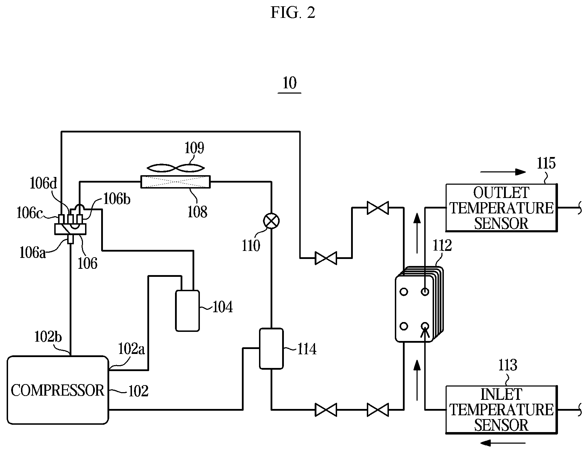

FIG. 2 illustrates a flow of water in the second heat exchanger in the outdoor unit during the defrosting operation of the first heat exchanger according to an embodiment.

An inlet temperature sensor 113 may be installed on a side into which water flows in the heat exchange plate through which water passes inside the second heat exchanger (refrigerant-water) 112. An outlet temperature sensor 115 may be installed on a side from which water flows out of the heat exchange plate through which water passes inside the second heat exchanger 112. When the defrosting operation of the first heat exchanger is performed to remove frost formed in the first heat exchanger 108, a temperature of water flowing from the indoor unit into the second heat exchanger may be detected by the inlet temperature sensor 113.

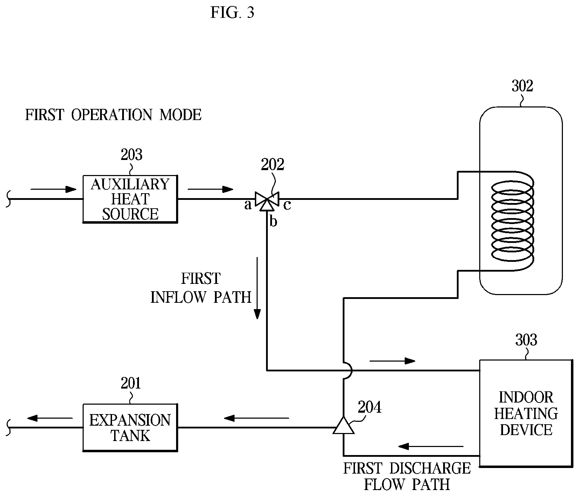

FIG. 3 illustrates a flow of water in the indoor unit when an operation mode of the heat pump system before the defrosting operation of the first heat exchanger is a first operation mode according to an embodiment.

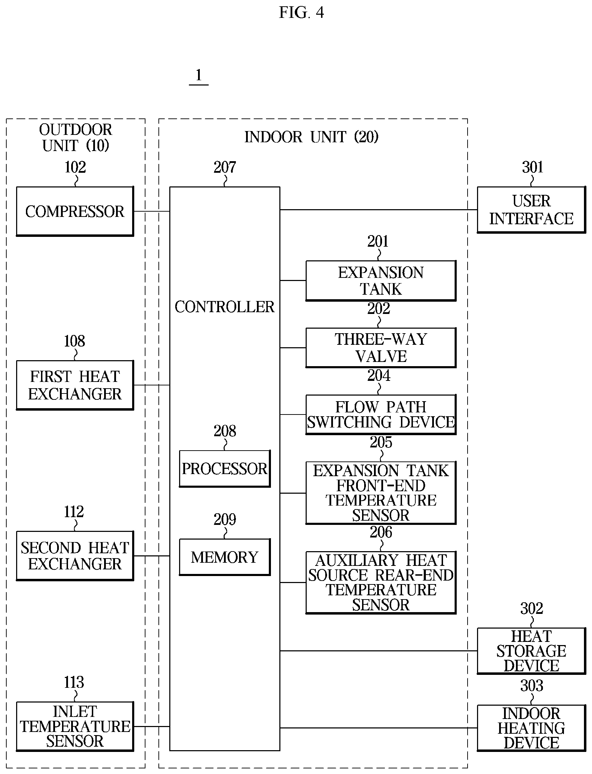

FIG. 4 illustrates a flow of water in the indoor unit when an operation mode of the heat pump system before the defrosting operation of the first heat exchanger is a second operation mode according to an embodiment.

In both the first operation mode and the second operation mode, after the refrigerant and outdoor air exchange heat in the first heat exchanger 108 in the outdoor unit 10, the refrigerant that has absorbed heat moves to the second heat exchanger. The refrigerant that has absorbed heat may exchange heat with water from the indoor unit 20 in the second heat exchanger (refrigerant-water). Hot water is produced as a result of the heat exchange, and the hot water may be supplied to the indoor unit 20.

However, the first operation mode refers to an operation mode for performing heating by supplying water discharged from the second heat exchanger to the indoor heating device, and refers to a case where the heat storage device 302 is not present in the indoor unit 20, or even when the heat storage device 302 is present, a portion c of the three-way valve 202 is closed so that water moves to a first inflow path a-b. Water that has moved through the first inflow path passes through the indoor heating device 303, flows out through a first discharge flow path, and flows into the outdoor unit 10 again.

The second operation mode refers to an operation mode for supplying hot water by supplying water discharged from the second heat exchanger to the heat storage device, and refers to a case where the heat storage device 302 is present in the indoor unit 20, and a portion b of the three-way valve 202 is closed so that water moves to a second inflow path a-c. Water that has moved through the second inflow path passes through the heat storage device 302, flows out through a second discharge flow path, and flows into the outdoor unit 10 again.

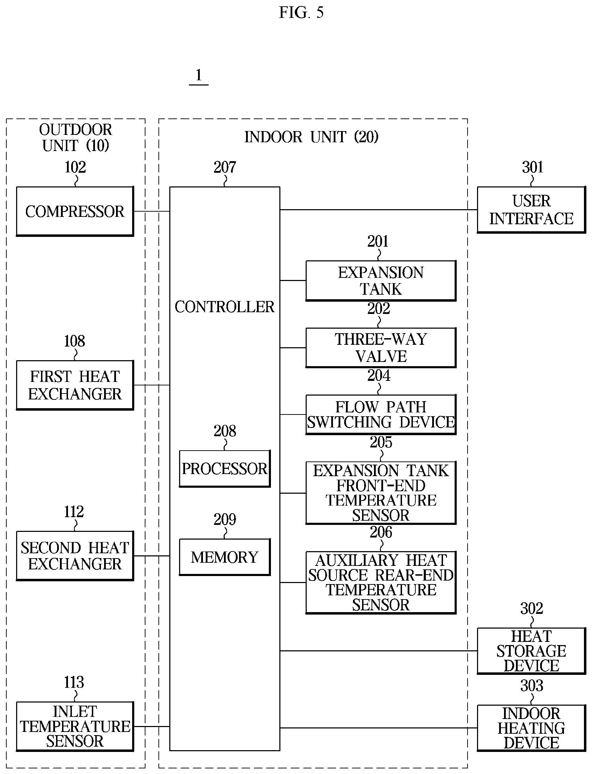

FIG. 5 is a control block diagram in the defrosting mode of the first heat exchanger in the heat pump system according to an embodiment.

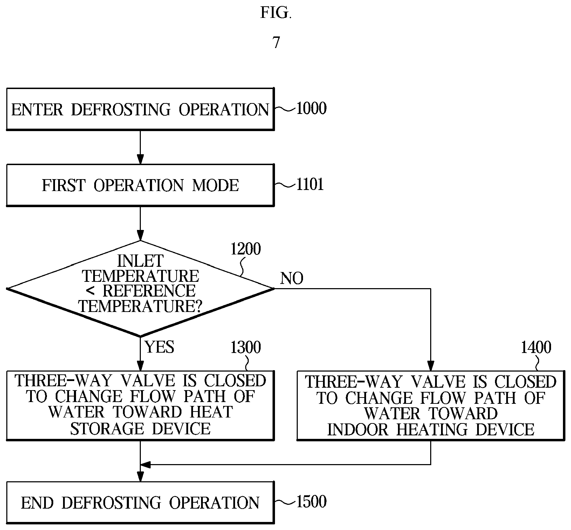

Referring to FIG. **7**, the heat pump system 1 according to an embodiment may include the outdoor unit 10, the indoor unit 20, a user interface 301, the heat storage device 302, and/or the indoor heating device 303. The outdoor unit 10 may include the compressor 102, the first heat exchanger 108, the second heat exchanger 112, and the inlet temperature sensor 113. The indoor unit 20 may include a controller 207, the expansion tank 201, the three-way valve 202, the flow path switching device 204, the expansion tank front-end temperature sensor 205, and the auxiliary heat source rear-end temperature sensor 206.

According to an embodiment, the compressor 102 may compress the refrigerant circulating through the outdoor unit 10 in the heat pump system 1.

According to an embodiment, the first heat exchanger 108 may correspond to a fin-and-tube-type heat exchanger through which heat exchange between the refrigerant and outdoor air is performed. In the first heat exchanger 108, frost formation, in which water vapor is condensed and frozen and attached to a surface of the refrigerant pipe, may occur. To prevent such frost formation, the heat pump system 1 may require the defrosting operation of the first heat exchanger. In this case, during the defrosting operation of the first heat exchanger, a low-pressure/low-temperature refrigerant flows into the second heat exchanger 112, and a freeze-and-burst may occur.

According to an embodiment, the second heat exchanger 112 may be provided to perform heat exchange between the refrigerant and water during the defrosting operation of the first heat exchanger.

According to an embodiment, the inlet temperature sensor 113 may be provided at an inlet into which water flows into the second heat exchanger 112. A temperature of water flowing into the second heat exchanger may be detected by the inlet temperature sensor 113. Inlet temperature information measured by the inlet temperature sensor 113 may be stored in a memory 209 of the controller in the indoor unit 20, and a temperature measurement value may be transmitted to a processor 208 to control an overall operation of the heat pump system 1.

According to an embodiment, the outlet temperature sensor 115 may be provided at an outlet from which water flows out of the second heat exchanger 112. A temperature of water discharged from the second heat exchanger may be detected by the outlet temperature sensor 115. Outlet temperature information measured by the outlet temperature sensor 115 may be stored in the memory 209 of the controller in the indoor unit 20, and a temperature measurement value may be transmitted to the processor 208 to control an overall operation of the heat pump system 1.

According to an embodiment, the expansion tank front-end temperature sensor 205 may be provided at an inlet into which water flows into the expansion tank 201. A temperature of water flowing into the expansion tank 201 may be detected by the expansion tank front-end temperature sensor 205. Water temperature information measured by the expansion tank front-end temperature sensor 205 may be stored in the memory 209 of the controller in the indoor unit 20, and a temperature measurement value may be transmitted to the processor 208 to control an overall operation of the heat pump system 1.

According to an embodiment, the auxiliary heat source rear-end temperature sensor 206 may be provided at an outlet from which water flows out of the auxiliary heat source 203. A temperature of water discharged from the auxiliary heat source may be detected by the auxiliary heat source rear-end temperature sensor 206. Water temperature information measured by the auxiliary heat source rear-end temperature sensor 206 may be stored in the memory 209 of the controller in the indoor unit 20, and a temperature measurement value may be transmitted to the processor 208 to control an overall operation of the heat pump system 1.

According to an embodiment, the controller 207 may include at least one processor 208 configured to control an operation of the heat pump system 1, and at least one memory 209 storing a program and data for controlling an operation of the heat pump system 1.

The at least one memory 209 may store data required for various embodiments. The memory 209 may be implemented in a form of a memory embedded in the heat pump system 1, or in a form of a memory detachable from the heat pump system 1, according to a data storage purpose. For example, data for driving the heat pump system 1 is stored in the memory embedded in the heat pump system 1, and data for an extended function of the heat pump system 1 may be stored in the memory detachable from the heat pump system 1. Meanwhile, the memory embedded in the heat pump system 1 may be implemented as at least one of a volatile memory (e.g., a dynamic random access memory (DRAM), a static random access memory (SRAM), or a synchronous dynamic random access memory (SDRAM)), a non-volatile memory (e.g., a one time programmable read only memory (OTPROM), a programmable read only memory (PROM), an erasable and programmable read only memory (EPROM), an electrically erasable and programmable read only memory (EEPROM), a mask read only memory (mask ROM), a flash read only memory (flash ROM), a flash memory (e.g., a NAND flash or a NOR flash), a hard drive, or a solid state drive (SSD)). In addition, the memory detachable from the heat pump system 1 may be implemented in a form such as a memory card (e.g., a compact flash (CF), a secure digital (SD), a micro secure digital (Micro-SD), a mini secure digital (Mini-SD), an extreme digital (xD), or a multi-media card (MMC)), or an external memory (e.g., a USB memory) connectable to a universal serial bus (USB) port.

The at least one processor 208 may control overall operation of the heat pump system 1. Specifically, the at least one processor 208 may be connected to each component of the heat pump system 1 (e.g., the compressor 102, the first heat exchanger 108, the second heat exchanger 112, the inlet temperature sensor 113, the outlet temperature sensor 115, the expansion tank front-end temperature sensor 205, the auxiliary heat source rear-end temperature sensor 206, the expansion tank 201, the three-way valve 202, the user interface 301, the flow path switching device 204, the heat storage device 302, and/or the indoor heating device 303) to overall control an operation of the heat pump system 1. For example, the at least one processor 208 may be electrically connected to the memory 209 to control an overall operation of the heat pump system 1. The processor 208 may be configured as one or a plurality of processors.

The at least one processor 208 may perform an operation of the heat pump system 1 according to various embodiments by executing at least one instruction stored in the memory 209.

The at least one processor 208 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 208 may control one or any combination of other components of the heat pump system 1, and may perform an operation related to communication or data processing. The at least one processor 208 may execute at least one program or instruction stored in the memory 209. For example, the at least one processor 208 may perform a method according to at least one embodiment of the disclosure by executing at least one instruction stored in the memory 209.

During the defrosting operation of the first heat exchanger 108, the controller 207 of the heat pump system 1 according to an embodiment may control the three-way valve 202 in the indoor unit 20 to allow water discharged from the second heat exchanger 112 to flow into the indoor heating device 303 or the heat storage device 302 based on an inlet temperature of water flowing into the second heat exchanger detected by the inlet temperature sensor 113 in the second heat exchanger 112.

During the defrosting operation of the first heat exchanger 108, the controller 207 of the heat pump system 1 according to an embodiment may control the three-way valve 202 in the indoor unit 20 to allow water discharged from the second heat exchanger 112 to flow into the indoor heating device 303 or the heat storage device 302, based on an outlet temperature of water discharged from the second heat exchanger detected by the outlet temperature sensor 115 in the second heat exchanger 112.

During the defrosting operation of the first heat exchanger 108, the controller 207 of the heat pump system 1 according to an embodiment may control the three-way valve 202 in the indoor unit 20 to allow water discharged from the second heat exchanger 112 to flow into the indoor heating device 303 or the heat storage device 302 based on a temperature of water flowing into the expansion tank detected by the expansion tank front-end temperature sensor 205 located at a front end of the expansion tank 205.

During the defrosting operation of the first heat exchanger 108, the controller 207 of the heat pump system 1 according to an embodiment may control the three-way valve 202 in the indoor unit 20 to allow water discharged from the second heat exchanger 112 to flow into the indoor heating device 303 or the heat storage device 302 based on a temperature of water discharged from the auxiliary heat source detected by the auxiliary heat source rear-end temperature sensor 206 located at a rear end of the auxiliary heat source 203.

During the defrosting operation of the first heat exchanger, the controller 207 of the heat pump system 1 according to an embodiment may identify an operation mode of the heat pump system 1 performed before entering the defrosting operation, and may control the three-way valve 202 in the indoor unit 20 to allow water discharged from the second heat exchanger 112 to flow into the indoor heating device 303 or the heat storage device 302 based on the identified operation mode and an inlet temperature of water flowing into the second heat exchanger.

When the operation mode of the heat pump system 1 performed before the defrosting operation of the first heat exchanger 108 is started is a first operation mode in which water discharged from the second heat exchanger is supplied to the indoor heating device, the controller 207 of the heat pump system 1 according to an embodiment may control the three-way valve 202 in the indoor unit 20 to allow water discharged from the second heat exchanger 112 to flow into the indoor heating device 303 or the heat storage device 302 based on an inlet temperature of water flowing into the second heat exchanger 112 measured by the inlet temperature sensor 113.

The controller 207 of the heat pump system 1 may control the three-way valve 202 in the indoor unit 20 to guide water discharged from the second heat exchanger 112 to indoor heating device 302, when the inlet temperature detected by the inlet temperature sensor 113 is equal to or greater than a reference temperature.

The controller 207 of the heat pump system 1 may control the three-way valve 202 in the indoor unit 20 to guide water discharged from the second heat exchanger 112 to the heat storage device 302, when the inlet temperature detected by the inlet temperature sensor 113 is lower than the reference temperature.

When the operation mode of the heat pump system 1 performed before the defrosting operation of the first heat exchanger 108 is started is a second operation mode in which water discharged from the second heat exchanger is supplied to the heat storage device, the controller 207 of the heat pump system 1 according to an embodiment may control the three-way valve 202 in the indoor unit 20 to allow water discharged from the second heat exchanger 112 to flow into the heat storage device 302 regardless of an inlet temperature of water flowing into the second heat exchanger 112 measured by the inlet temperature sensor 113.

The controller 207 of the heat pump system 1 according to an embodiment may control a heat source in the heat storage device 302 to allow a temperature of water discharged from the heat storage device 302 to be greater than the reference temperature.

The controller 207 of the heat pump system 1 according to an embodiment may obtain and set information about the reference temperature through the user interface 301, and may store the information about the reference temperature in the memory 209.

The heat pump system 1 according to an embodiment may further include the flow path switching device 204 connecting an inlet of the second heat exchanger 112 and an outlet of the indoor heating device 303 or an outlet of the heat storage device 302. The flow path switching device 204 may be configured as one valve or a plurality of valves. The flow path switching device 204 may be a first valve provided at an outlet side of the indoor heating device 303 and a second valve provided at an outlet side of the heat storage device 302.

The controller 207 of the heat pump system 1 according to an embodiment may control the flow path switching device 204 to allow an inlet of the second heat exchanger 112 and an outlet of the indoor heating device 303 to be connected, when water discharged from the second heat exchanger 112 is supplied to the indoor heating device 303.

The expansion tank 201 may be a tank that buffers a pressure fluctuation in a flow path through which water flows in the indoor unit 20.

According to an embodiment, the three-way valve 202 may determine a direction in which water flows in the indoor unit 20, to allow water to flow toward the heat storage device 302 or the indoor heating device 303. Specifically, the three-way valve may be controlled based on an inlet temperature of water flowing into the second heat exchanger 112, and thus a direction of a flow path through which water flows in the indoor unit 20 may be changed.

According to an embodiment, the heat pump system 1 may include a communication interface 301 for communicating with an external device (e.g., a server or a user device) in a wired and/or wireless manner.

The communication interface 301 may include at least one of a short-range wireless communication module or a long-range wireless communication module.

The communication interface 301 may transmit data to an external device (e.g., a server, a user device, or a temperature probe), or receive data from an external device. To this end, the communication interface 301 may support establishment of a direct (e.g., wired) communication channel or a wireless communication channel between external devices, and performance of communication through the established communication channel. According to an embodiment, the communication interface 301 may include a wireless communication module (e.g., a cellular communication module, a short-range wireless communication module, or a global navigation satellite system (GNSS) communication module) or a wired communication module (e.g., a local area network (LAN) communication module, or a power line communication module). A corresponding communication module among these communication modules may communicate with an external device through a first network (e.g., a short-range communication network such as Bluetooth, wireless fidelity (WiFi) direct, or infrared data association (IrDA)) or a second network (e.g., a long-range communication network such as a legacy cellular network, a 5G network, a next-generation communication network, the Internet, or a computer network (e.g., a LAN or a wide area network (WAN))). Such various kinds of communication modules may be integrated into one component (e.g., a single chip), or may be implemented as a plurality of components (e.g., a plurality of chips) separate from each other.

The short-range wireless communication module may include a Bluetooth communication module, a Bluetooth low energy (BLE) communication module, a near field communication module, a wireless local area network (WLAN) (WiFi) communication module, a Zigbee communication module, an infrared data association (IrDA) communication module, a Wi-Fi direct (WFD) communication module, an ultra-wideband (UWB) communication module, an Ant+ communication module, a microwave (uWave) communication module, or the like, but is not limited thereto.

The long-range wireless communication module may include a communication module that performs various kinds of long-range communication, and may include a mobile communication interface. The mobile communication interface transmits and receives a wireless signal to and from at least one of a base station, an external terminal, or a server on a mobile communication network.

The communication interface 301 may communicate with an external device through a nearby access point (AP). The access point (AP) may connect a local area network (LAN) to which the refrigerator 1 is connected to a wide area network (WAN) to which a server is connected. The heat pump system 1 may be connected to the server through the wide area network (WAN).

The heat pump system 1 may receive various signals (e.g., weather information or a remote instruction) from an external device (e.g., a server or a user device) through the communication interface 301.

The communication interface 301 may be a user interface, that is, an input and output interface. The input interface may include a key, a touch screen, a microphone, or the like. The input interface may receive a user input and transfer the user input to the processor. The output interface may include a display, a speaker, or the like. The output interface may output various notifications, messages, information, or the like generated by the processor.

According to an embodiment, the heat storage device 302 may be a water tank that stores water supplied from an external water supply source, a water tank heating device, or a hot water supply tank. The heat storage device 302 may include a heat source that heats water stored in the water tank. The heat storage device 302 may include a flow path through which water circulating through the heat pump system 1 flows.

A temperature of water stored in the heat storage device 302 may be maintained to be greater than the reference temperature by the controller 207 in the indoor unit 20.

According to an embodiment, the indoor heating device 303 may include an indoor room, an ondol, a boiler pipe, and a radiator.

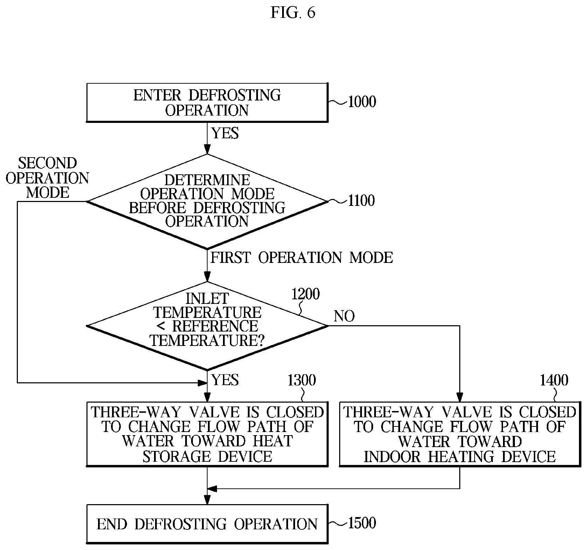

FIG. 6 is a flowchart illustrating a method for controlling the heat pump system 1 during the defrosting operation of the first heat exchanger in the heat pump system 1 according to an embodiment.

FIG. 7 is a flowchart illustrating a method for controlling a heat pump system that controls a flow of water according to an inlet temperature of water flowing into the second heat exchanger during a defrosting operation, when an operation mode of the heat pump system before the defrosting operation of the first heat exchanger in the heat pump system is a first operation mode according to an embodiment.

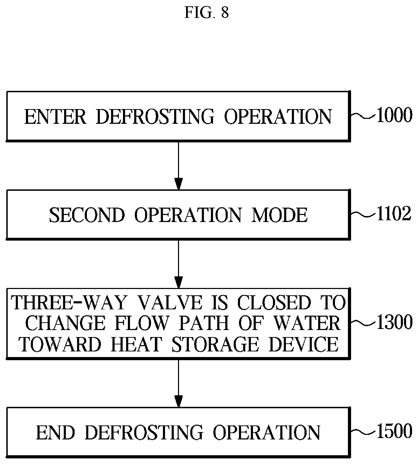

FIG. 8 is a flowchart illustrating a method for controlling a heat pump system for determining a flow of water during a defrosting operation, when an operation mode of the heat pump system before the defrosting operation of the first heat exchanger in the heat pump system is a second operation mode according to an embodiment.

Referring to FIG. 6, in the method for controlling the heat pump system 1 according to an embodiment, upon entering a defrosting operation of the first heat exchanger to remove ice frosted on the refrigerant pipe of the first heat exchanger 108 (1000), an operation mode of the heat pump system before the defrosting operation of the first heat exchanger 108 may be determined (1100).

Referring to FIG. 7, in the method for controlling the heat pump system 1 according to an embodiment, when the operation mode of the heat pump system before the defrosting operation of the first heat exchanger 108 is a first operation mode (1101), whether an inlet temperature of water flowing into the second heat exchanger 112 is lower than a reference temperature may be determined (1200).

In the method for controlling the heat pump system 1 according to an embodiment, when the inlet temperature of water flowing into the second heat exchanger 112 is equal to or greater than the reference temperature (No in operation 1200), a portion c of the three-way valve 202 may be closed to change the flow path of water toward the indoor heating device 303 (1400).

In the method for controlling the heat pump system 1 according to an embodiment, when the inlet temperature of water flowing into the second heat exchanger 112 is lower than the reference temperature (Yes in operation 1200), a portion b of the three-way valve 202 may be closed to change the flow path of water toward the heat storage device 302 (1300).

Referring to FIG. 8, in the method for controlling the heat pump system 1 according to an embodiment, when the operation mode of the heat pump system before the defrosting operation of the first heat exchanger 108 is a second operation mode (1102), a portion b of the three-way valve 202 may be closed to change the flow path of water toward the heat storage device 302 (1300).

When water in the indoor unit 20 flows to the heat storage device 302, a temperature of water is maintained high during the defrosting operation of the first heat exchanger without an auxiliary heat source, and thus a continuous operation may be performed without stopping an operation of a heat pump system to prevent a freeze-and-burst of the second heat exchanger. In addition, even during the defrosting operation, cold water does not flow into the indoor heating device 303 or the like, thereby preventing inconvenience of a user. That is, because the defrosting operation may be performed while a temperature of water is maintained high without an auxiliary heat source, damage to a heat pump system may be prevented, and an operation rate and efficiency of a heat pump system may be increased, thereby increasing satisfaction of a user.

According to an aspect of the disclosure, without additional sensors, a hot water usage pattern of a user may be calculated by adding only a temperature sensor that detects a temperature of a water tank pipe, and thus the compressor may be controlled to be turned on/off. Accordingly, simple process and price competitiveness may be achieved, and hot water may be supplied with optimal energy efficiency.

The disclosed embodiments may be implemented in the form of a recording medium that stores instructions executable by a computer. The instructions may be stored in the form of program codes, and when executed by a processor, the instructions may create a program module to perform operations of the disclosed embodiments.

The computer-readable recording medium may be provided in the form of a non-transitory storage medium. The term 'non-transitory storage medium' may refer to a tangible device without including a signal (e.g., electromagnetic waves) and may not distinguish between storing data in the storage medium semi-permanently and temporarily. For example, the non-transitory storage medium may include a buffer that temporarily stores data.

The method according to various embodiments disclosed herein may be provided in a computer program product. The computer program product may be traded between a seller and a buyer as a product. The computer program product may be distributed in the form of a machine-readable recording medium (e.g., compact disc read only memory (CD-ROM)), or may be distributed (e.g., download or upload) through an application store (e.g., Play Store^{TM}) online or directly between two user devices (e.g., smartphones). In the case of online distribution, at least a portion of the computer program product (e.g., downloadable app) may be stored at least semi-permanently or may be temporarily generated in a recording medium, such as a memory of a server of a manufacturer, a server of an application store, or a relay server.

Although embodiments of the disclosure have been described with reference to the accompanying drawings, a person having ordinary skilled in the art will appreciate that other specific modifications may be easily made without departing from the technical spirit or essential features of the disclosure. Therefore, the foregoing embodiments should be regarded as illustrative rather than limiting in all aspects.

## Claims

1. A heat pump system, comprising:
a compressor configured to compress a refrigerant;
a first heat exchanger configured to perform heat exchange between the refrigerant and outdoor air;
a second heat exchanger configured to perform heat exchange between water and the refrigerant discharged from the compressor or the first heat exchanger;
an inlet temperature sensor configured to detect an inlet temperature of water flowing into the second heat exchanger;
a three-way valve configured to switch a flow path of water discharged from the second heat exchanger;
a heat storage device configured to heat water discharged from the second heat exchanger; and
a controller configured to:
identify an operation mode of the heat pump system performed before entering a defrosting operation of the first heat exchanger, and
during the defrosting operation of the first heat exchanger, control the three-way valve to allow water discharged from the second heat exchanger to be supplied to an indoor heating device or the heat storage device, based on the operation mode and the inlet temperature of water flowing into the second heat exchanger detected by the inlet temperature sensor.

2. The heat pump system of claim 1, wherein the controller is configured to:
in response to the operation mode being a first operation mode in which water discharged from the second heat exchanger is supplied to the indoor heating device, control the three-way valve to allow water discharged from the second heat exchanger to be supplied to the indoor heating device or the heat storage device based on whether the inlet temperature of water flowing into the second heat exchanger is lower than a reference temperature.

3. The heat pump system of claim 2, wherein the controller is configured to control the three-way valve to guide water discharged from the second heat exchanger to the indoor heating device, in response to the inlet temperature of water flowing into the second heat exchanger being equal to or greater than the reference temperature.

4. The heat pump system of claim 2, wherein the controller is configured to control the three-way valve to guide water discharged from the second heat exchanger to the heat storage device, in response to the inlet temperature of water flowing into the second heat exchanger being lower than the reference temperature.

5. The heat pump system of claim 1, wherein the controller is configured to control the three-way valve to allow water discharged from the second heat exchanger to be supplied to the heat storage device regardless of the inlet temperature of water flowing into the second heat exchanger, in response to the operation mode being a second operation mode in which water discharged from the second heat exchanger is supplied to the heat storage device.

6. The heat pump system of claim 2, wherein the heat storage device comprises:
a water tank configured to store water supplied from an external water supply source; and
a heat source configured to heat water stored in the water tank,
wherein the controller is configured to control the heat source to maintain a temperature of water discharged from the heat storage device to be greater than the reference temperature.

7. The heat pump system of claim 2, further comprising:
a user interface configured to obtain a user input,
wherein the controller is configured to set the reference temperature based on the user input obtained via the user interface.

8. The heat pump system of claim 1, further comprising:
a flow path switching device connecting an inlet of the second heat exchanger and an outlet of the indoor heating device or an outlet of the heat storage device,
wherein the controller is configured to:
control the flow path switching device to allow the inlet of the second heat exchanger and the outlet of the indoor heating device to be connected, based on water discharged from the second heat exchanger being supplied to the indoor heating device, and
control the flow path switching device to allow the inlet of the second heat exchanger and the outlet of the heat storage device to be connected, based on water discharged from the second heat exchanger being supplied to the heat storage device.

9. A method for controlling a heat pump system comprising a first heat exchanger, a second heat exchanger, a heat storage device, and a three-way valve configured to switch a flow path of water discharged from the second heat exchanger, the method comprising:
identifying an operation mode of the heat pump system performed before entering a defrosting operation of the first heat exchanger; and
controlling, during the defrosting operation of the first heat exchanger, the three-way valve to allow water discharged from the second heat exchanger to be supplied to an indoor heating device or the heat storage device based on the operation mode and an inlet temperature of water flowing into the second heat exchanger detected by an inlet temperature sensor.

10. The method of claim 9, wherein the controlling of the three-way valve comprises:
in response to the operation mode being a first operation mode in which water discharged from the second heat exchanger is supplied to the indoor heating device, controlling the three-way valve based on whether the inlet temperature of water flowing into the second heat exchanger is lower than a reference temperature.

11. The method of claim 10, wherein the controlling of the three-way valve comprises:
controlling the three-way valve to guide water discharged from the second heat exchanger to the indoor heating device, in response to the inlet temperature of water flowing into the second heat exchanger being equal to or greater than the reference temperature.

12. The method of claim 10, wherein the controlling of the three-way valve comprises:
controlling the three-way valve to guide water discharged from the second heat exchanger to the heat storage device, in response to the inlet temperature of water flowing into the second heat exchanger being lower than the reference temperature.

13. The method of claim 9, wherein the controlling of the three-way valve comprises:
controlling the three-way valve to allow water discharged from the second heat exchanger to be supplied to the heat storage device regardless of the inlet temperature of water flowing into the second heat exchanger, in response to the operation mode being a second operation mode in which water discharged from the second heat exchanger is supplied to the heat storage device.

14. The method of claim 10, further comprising:
controlling a heat source of the heat storage device to maintain a temperature of water discharged from the heat storage device to be greater than the reference temperature.

15. The method of claim 10, further comprising:
setting the reference temperature based on a user input obtained via a user interface.
